# EUROPÄISCHE PATENTSCHRIFT

(11) **EP 1 038 611 B1**
(45) Veröffentlichungstag und Bekanntmachung des Hinweises auf die Patenterteilung: **29.09.2004**
(21) Anmeldenummer: 00104074.0
(22) Anmeldetag: 28.02.2000
(51) Int. Cl.: B22C 9/24, F04C 11/00, F04B 53/00, F04D 13/02

(54) **Laterne zum Befestigen eines Motors an einer Pumpe**
Coupling housing for fastening a motor to a pump
Accouplement pour lier un moteur à une pompe

(30) Priorität: 22.03.1999 DE 19912936
(43) Veröffentlichungstag der Anmeldung: 27.09.2000
(73) Patentinhaber: WILO AG, 44263 Dortmund (DE)
(72) Erfinder: Stracke, Roland, 59425 Unna (DE)
(74) Vertreter: COHAUSZ DAWIDOWICZ HANNIG & PARTNER

(56) Entgegenhaltungen:
- DE-U- 8 606 067
- FR-A- 2 644 520
- GB-A- 2 079 404

## Beschreibung

Die vorliegende Erfindung betrifft eine Laterne zum Befestigen eines Motors an einer Pumpe mit einem ersten Flansch zur Befestigung an dem Motor und mit einem zweiten Flansch zur Befestigung an der Pumpe sowie mit mindestens zwei Verbindungsstegen, die zwischen dem ersten und dem zweiten Flansch in der Mantelfläche eines gedachten Kegelstumpfes verlaufen.

Derartige Laternen sind allgemein bekannt wie z.B. aus GB-A-2 079 404. Der eine Pumpe antreibende Motor wird über eine Laterne in einem bestimmten Abstand mit der Pumpe verbunden. Die Motorantriebswelle tritt dabei mittig durch Öffnungen in den beiden Flanschen zur Befestigung am Motor bzw. an der Pumpe hindurch.

Obwohl eine derartige Laterne ein relativ einfaches Bauteil darstellt, ist ihre Herstellung mit erheblichen Kosten verbunden. Laternen werden üblicherweise durch Gießen hergestellt, wobei zum Ausformen der Durchbrüche zwischen den einzelnen Verbindungsstegen einzelne Kerne erforderlich sind, die beim Entformen der Laterne jeweils radial nach außen gezogen werden müssen. Auch die Bereiche zwischen den beiden Flanschen außerhalb der Verbindungsstege machen den Einsatz von seitlich angeordneten Kernen erforderlich. Dies bedingt ein relativ aufwendiges Formwerkzeug sowie einen erhöhten Aufwand beim Schließen und Öffnen der Form. Die Erfindung betrifft ferner eine Vorrichtung zur Herstellung einer solchen Laterne durch Gießen.

Aufgabe der Erfindung ist es daher, eine konstruktiv einfache und leicht handhabbare Laterne der eingangs genannten Art zu schaffen, die bei großer Stabilität kostengünstig herstellbar ist. Aufgabe der Erfindung ist es ferner, eine konstruktiv einfache Vorrichtung zur Herstellung einer derartigen Laterne bereitzustellen.

Diese Aufgabe wird erfindungsgemäß durch eine Laterne gemäß Anspruch 1 bzw. durch eine Vorrichtung gemäß Anspruch 4 gelöst.

Wesentlich ist dabei, daß der erste Flansch eine der Anzahl der Verbindungsstege entsprechende Anzahl von nach innen gerichteten Ausnehmungen aufweist, die sich jeweils über einen Winkelbereich erstrecken, der zwischen jeweils zwei Verbindungsstegen liegt, und daß der zweite Flansch eine der Anzahl der Verbindungsstege entsprechende Anzahl von nach außen gerichteten Ausnehmungen aufweist, die sich jeweils über einen Winkelbereich erstrecken, der dem Winkelbereich je eines Verbindungsstegs entspricht. Somit erstreckt sich eine Ausnehmung im ersten Flansch genau über den Sektor, der durch zwei Ausnehmungen im zweiten Flansch begrenzt wird. Ebenso erstreckt sich eine Ausnehmung im zweiten Flansch über einen Sektor, der durch zwei Ausnehmungen des ersten Flansches begrenzt ist, bzw. über den sich ein Verbindungssteg erstreckt.

Der wesentliche Vorteil einer derartigen erfindungsgemäßen Ausbildung einer Laterne liegt darin, daß Hinterschnitte, die den Einsatz von Kernen bei der Herstellung erforderlich machen, nicht vorhanden sind. Eine derartige Laterne zeichnet sich somit sowohl durch eine einfache Konstruktion als auch durch eine preisgünstige Herstellbarkeit aus. Durch die Möglichkeit auf Kerne für die seitlichen Durchbrüche der Laterne verzichten zu können, können Kosteneinsparungen von bis zu ca. 40% erreicht werden, was insbesondere bei großen Stückzahlen von großem Vorteil ist. Die Handhabung der erfindungsgemäßen Laterne gestaltet sich dabei genau so einfach, wie es bei den bisher bekannten Laternen der Fall ist.

Besonders vorteilhaft ist es, wenn der erste Flansch mit dem zweiten Flansch über zwei bis acht, insbesondere über vier, Verbindungsstege verbunden ist. Insbesondere bei vier Verbindungsstegen, die auch als Rippen bezeichnet werden, ist eine besonders große Festigkeit bzw. Formstabilität der Laterne auch bei abrupten Drehzahländerungen des Motors gegeben.

In einer bevorzugten Ausführungsform ist die Laterne aus Grauguß gefertigt. Die erfindungsgemäße Ausbildung ist jedoch auch bei anderen Werkstoffen in vorteilhafter Weise einsetzbar.

Vorrichtungen zur Herstellung einer Laterne durch Gießen weisen eine erste Formhälfte auf, die mit einem die Innenkontur der Laterne ausformenden Innenkern in eine die Außenkontur der Laterne ausformende zweite Formhälfte einschiebbar ist. Für die Herstellung der bisher bekannten Laternen sind zusätzlich von außen einschiebbare Kerne für die Durchbrüche zwischen den Verbindungsstegen und für die äußeren Randbereiche zwischen den beiden Flanschen erforderlich.

Eine besonders einfache und somit preiswerte Vorrichtung zur Herstellung der erfindungsgemäßen Laterne durch Gießen zeichnet sich dadurch aus, daß der Innenkern radial nach außen gerichtete Vorsprünge aufweist, die sich jeweils über einen Winkelbereich erstrecken, der dem Winkelbereich zwischen jeweils zwei Verbindungsstegen der Laterne entspricht und die im ineinander eingeschobenen Zustand der beiden Formhälften in entsprechend ausgebildeten Ausnehmungen der zweiten Formhälfte einliegen. Die Ausnehmungen zwischen jeweils zwei Verbindungsstegen der Laterne sowie die Ausnehmungen im ersten Flansch der Laterne werden dabei vorteilhafterweise durch die Vorsprünge des Innenkerns ausgeformt. Da der erste Flansch im Bereich der Ausnehmungen jeweils eine nach innen offene Ausnehmung aufweist, kann der Innenkern mit seinen Vorsprüngen beim Entformen der Laterne auf einfache Weise in axialer Richtung aus der anderen Formhälfte herausgezogen werden.

Weitere Vorteile und Merkmale der Erfindung ergeben sich aus der nachfolgenden Beschreibung und den in den Zeichnungen dargestellten Ausführungsbeispielen.

Es zeigen:
- **Figur 1:**: Dreidimensionale Ansicht einer erfindungsgemäßen Laterne.
- **Figur 2:**: Querschnitt durch die Laterne und das Formwerkzeug entlang der Schnittebene A-A aus Figur 1.
- **Figur 3:**: Querschnitt durch die Laterne und das Formwerkzeug entlang der Schnittebene B-B aus Figur 1.
- **Figur 4:**: Dreidimensionale Ansicht einer aus dem Stand der Technik bekannten Laterne.
- **Figur 5:**: Querschnitt durch die Laterne und das Formwerkzeug entlang der Schnittebene C-C aus Figur 4.
- **Figur 6:**: Querschnitt durch die Laterne und das Formwerkzeug entlang der Schnittebene D-D aus Figur 4.

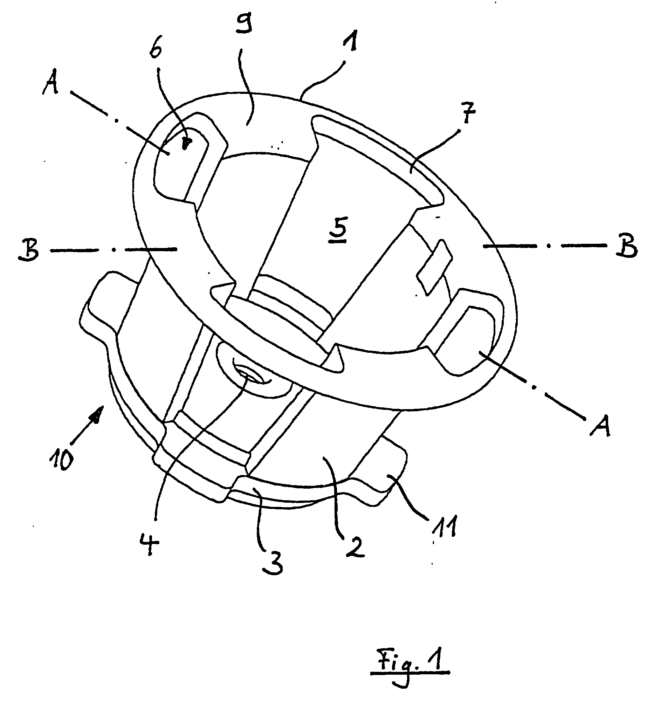

Die in Figur 1 gezeigte Laterne hat einen ersten Flansch 1, der über vier Verbindungsstege 2 mit einem zweiten Flansch 3 verbunden ist. Ein nicht dargestellter Elektromotor wird an der dem zweiten Flansch 3 abgewandten Seite des ersten Flanschs 1 befestigt, insbesondere angeschraubt. Die Motorwelle erstreckt sich dabei durch einen inneren offenen Bereich des ersten Flanschs 1 sowie durch eine in der Mitte des zweiten Flanschs 3 vorgesehene Öffnung 4. Auf der dem ersten Flansch 1 abgewandten Seite des zweiten Flanschs 3 wird eine nicht dargestellte Pumpe befestigt, insbesondere angeschraubt, die von der Motorwelle angetrieben wird.

Der erste Flansch 1 hat einen größeren Außendurchmesser als der zweite Flansch 3. Die Verbindungsstege 2 sind am ersten Flansch 1 auf einem größeren Durchmesser befestigt als der Durchmesser auf dem sie am zweiten Flansch 3 münden. Die einzelnen Verbindungsstege 2 verlaufen daher schräg auf der Mantelfläche eines zwischen dem ersten Flansch 1 und dem zweiten Flansch 3 gedachten Kegelstumpfes. Zwischen jeweils zwei Verbindungsstegen 2 befindet sich ein offener Bereich 5.

Der erste Flansch 1 weist an dem die innere Öffnung umgebenden Bereich vier nach innen gerichtete Ausnehmungen 6 auf, die sich jeweils über den gleichen Winkelsektor erstrecken, wie ein offener Bereich 5 zwischen zwei Verbindungsstegen 2. Radial außerhalb der Ausnehmungen 6 ist jeweils nur ein Steg 7 ausgebildet, der einen zumindest annähernd rechteckigen Querschnitt 8 aufweist. Zwischen jeweils zwei Stegen 7 bzw. zwischen jeweils zwei Ausnehmungen 6 erstreckt sich ein Bereich 9 in der Ebene des ersten Flanschs 1 radial nach innen, der an seinem inneren Ende mit jeweils einem Verbindungssteg 2 verbunden ist.

Der zweite Flansch 3 weist vier nach außen gerichtete Ausnehmungen 10 auf, die sich jeweils über den gleichen Winkelsektor erstrecken, in dem ein Verbindungssteg 2 verläuft. Im Bereich der offenen Bereiche 5 zwischen den Verbindungsstegen 2 hat der zweite Flansch 3 jeweils einen radial nach außen gerichteten Vorsprung 11.

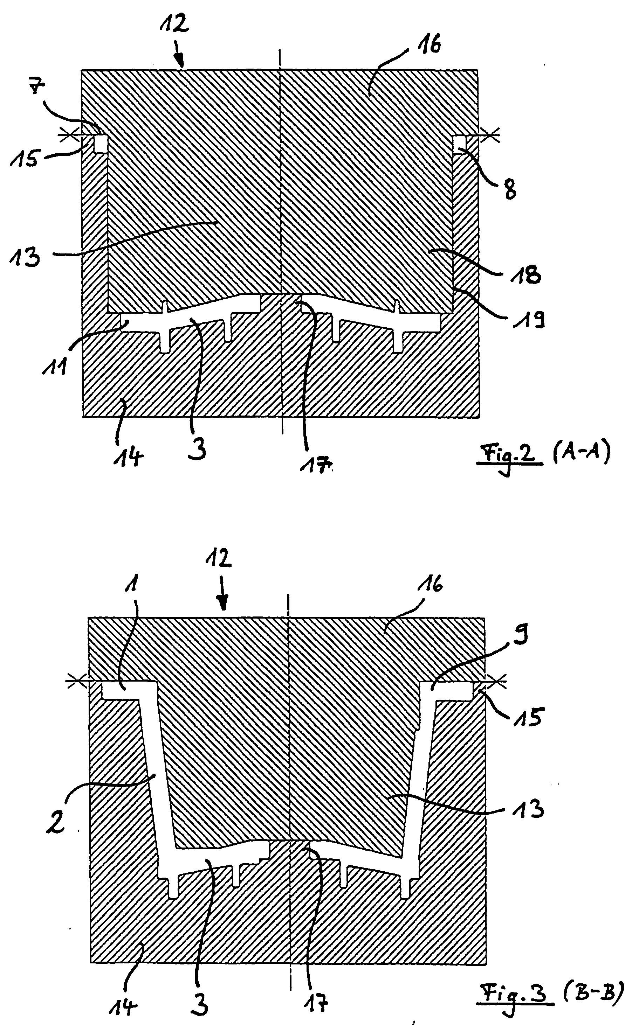

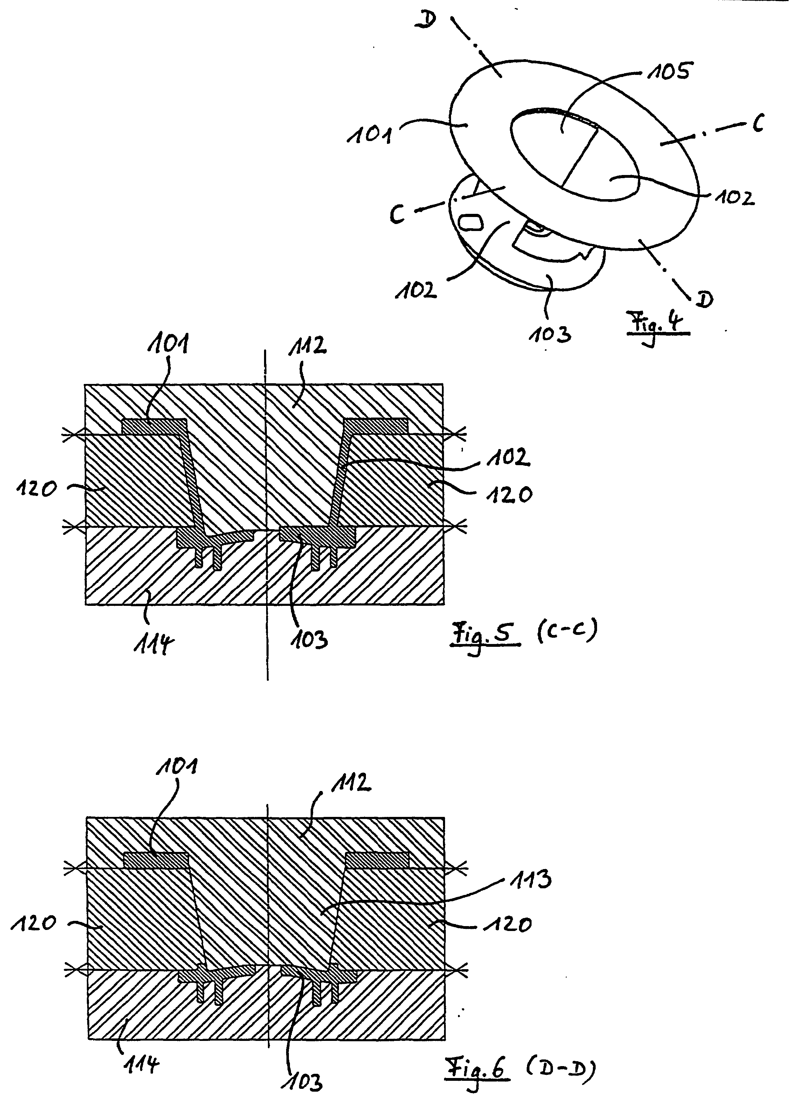

Die Figuren 2 und 3 zeigen eine erfindungsgemäße Vorrichtung zur Herstellung der Laterne gemäß Figur 1. Sie weist eine erste Formhälfte 12 auf, die mit ihrem vorderen Bereich 16 die am Motor anliegende Stirnseite des ersten Flanschs 1 sowie mit einem kegelstumpfförmigen Innenkern 13 die Innenkontur der Verbindungsstege 2 sowie die dem Motor zugewandte innere Seite des zweiten Flanschs 3 ausformt. Eine zweite Formhälfte 14 liegt über einen ringförmigen Vorsprung 15, der die Außenseite des ersten Flanschs 1 ausformt, am unteren Bereich 16 der ersten Formhälfte 12 an. Die Innenkontur der zweiten Formhälfte 14 formt die Außenseiten der Verbindungsstege 2 sowie die der Pumpe zugewandte Seite des zweiten Flanschs 3 aus. Ein mittiger Vorsprung 17 ist an der zweiten Formhälfte 14 vorgesehen, um die Öffnung 4 im zweiten Flansch 3 der Laterne auszuformen.

Von dem Innenkern 13 der ersten Formhälfte 12 erstrecken sich vier Vorsprünge 18 radial nach außen, die die Ausnehmungen 6 im ersten Flansch 1 sowie die offenen Bereich 5 zwischen den Verbindungsstegen 2 ausformen. Die Vorsprünge 18 liegen dabei in entsprechend geformten Ausnehmungen 19 der zweiten Formhälfte 14 ein. Während der Innenkern 13 im Bereich der Verbindungsstege 2 kegelstumpfförmig ausgebildet ist, weisen die Vorsprünge 18 eine zylindrische Außenkontur und die Ausnehmungen 19 eine entsprechend geformte zylindrische Innenkontur auf. Von der Seite her in radialer Richtung einsteckbare Kerne sind dabei nicht erforderlich. Die beiden Formhälften 12 und 14, die ohne Hinterschneidungen ausgebildet sind, können zum Entformen der Laterne auf einfache Weise in axialer Richtung auseinandergezogen werden.

Eine derartige einfache Herstellbarkeit war bei einer aus dem Stand der Technik bekannten Laterne gemäß Figur 4 nicht möglich, da hierbei zwischen dem ersten Flansch 101 und dem zweiten Flansch 103 Hinterschneidungen bzw. in axialer Richtung Materialüberdeckungen vorhanden sind. Daher sind bei dem Formwerkzeug zur Herstellung dieser bekannten Laternen nicht nur für die Ausformung der offenen Bereiche 105 zwischen den Verbindungsstegen 102, sondern auch für die Ausformung der Seitenflächen der Verbindungsstege 102 sowie für die Ausformung der einander zugewandten Seiten der beiden Flansche 101 und 103 radial einschiebbare Formkerne 120 erforderlich. Das Formwerkzeug ist daher aufgrund der erheblich größeren Anzahl von Formelementen aufwendig und teuer in der Anschaffung sowie im Betrieb.

Die erfindungsgemäße Vorrichtung gemäß den Figuren 2 und 3 zur Herstellung einer erfindungsgemäßen Laterne gemäß der Figur 1 weist demgegenüber im wesentlichen nur zwei Formelemente 12 und 14 auf, wodurch die Laternen erheblich kostengünstiger hergestellt werden können.

## Patentansprüche

1. Laterne zum Befestigen eines Motors an einer Pumpe, mit einem ersten Flansch (1) zur Befestigung an dem Motor und mit einem zweiten Flansch (3) zur Befestigung an der Pumpe sowie mit mindestens zwei Verbindungsstegen (2), die zwischen dem ersten und dem zweiten Flansch (1, 3) in der Mantelfläche eines gedachten Kegelstumpfes verlaufen, **dadurch gekennzeichnet,**
**daß** der erste Flansch (1) eine der Anzahl der Verbindungsstege (2) entsprechende Anzahl von nach innen gerichteten Ausnehmungen (6) aufweist, die sich jeweils über einen Winkelbereich erstrecken, der zwischen jeweils zwei Verbindungsstegen (2) liegt,
und **daß** der zweite Flansch (3) eine der Anzahl der Verbindungsstege (2) entsprechende Anzahl von nach außen gerichteten Ausnehmungen (10) aufweist, die sich jeweils über einen Winkelbereich erstrecken, über den sich ein Verbindungssteg (2) erstreckt.

2. Laterne nach Anspruch 1, **dadurch gekennzeichnet, daß** der erste Flansch (1) mit dem zweiten Flansch (3) über zwei bis acht, insbesondere über vier Verbindungsstege (2) verbunden ist.

3. Laterne nach Anspruch 1 oder 2, **dadurch gekennzeichnet, daß** sie aus Grauguß gefertigt ist.

4. Vorrichtung zur Herstellung einer Laterne nach einem der vorherigen Ansprüche durch Gießen, mit einer ersten Formhälfte (12), die mit einem die Innenkontur der Laterne ausformenden Innenkern (13) in eine die Außenkontur der Laterne ausformende zweite Formhälfte (14) einschiebbar ist,
**dadurch gekennzeichnet,**
**daß** der Innenkern (13) radial nach außen gerichtete Vorsprünge (18) aufweist, die sich jeweils über einen Winkelbereich erstrecken, der dem Winkelbereich zwischen jeweils zwei Verbindungsstegen (2) der Laterne entspricht, und die im ineinander eingeschobenen Zustand der beiden Formhälften (12, 14) in entsprechend ausgebildeten Ausnehmungen (19) der zweiten Formhälfte einliegen.

5. Vorrichtung nach Anspruch 4, **dadurch gekennzeichnet, daß** die Vorsprünge (18) des Innenkerns (13) die offenen Bereiche (5) zwischen jeweils zwei Verbindungsstegen (2) der Laterne und die Ausnehmungen (6) im ersten Flansch (1) der Laterne ausformen.

## Claims

1. Coupling member for securing a motor to a pump, having a first flange (1) for securing to the motor and having a second flange (3) for securing to the pump and also having at least two connecting webs (2) which extend between the first and second flanges (1, 3) along the surface of a notional truncated cone, **characterised in that** the first flange (1) has a number of inwardly facing recesses (6) corresponding to the number of connecting webs (2) and in each case extending along an angular zone that lies between two connecting webs (2), and **in that** the second flange (3) has a number of outwardly facing recesses (10) corresponding to the number of connecting webs (2) and in each case extending along an angular zone along which a connecting web (2) extends.

2. Coupling member according to claim1, **characterised in that** the first flange (1) is connected to the second flange (3) by way of two to eight, especially four, connecting webs (2)

3. Coupling member according to claim 1 or 2, **characterised in that** it is made of cast iron.

4. Apparatus for producing a coupling member according to one of the preceding claims by casting, having a first mould half (12) whose inner core (13) forms the inner contour of the coupling member and which can be moved into a second mould half (14) which forms the outer contour of the coupling member, **characterised in that** the inner core (13) has radially outwardly facing projections (18) each of which extends along an angular zone that corresponds to the angular zone between two respective connecting webs (2) of the coupling member and which, in the state when the two mould halves (12, 14) have been moved one into the other, lie in correspondingly formed recesses (19) of the second mould half.

5. Apparatus according to claim 4, **characterised in that** the projections (18) of the inner core (13) form the open regions (5) in each case between two connecting webs (2) of the coupling member and form the recesses (6) in the first flange (1) of the coupling member.

## Revendications

1. Accouplement pour la fixation d'un moteur à une pompe, avec une première collerette (1) pour la fixation au moteur et une seconde collerette (3) pour la fixation à la pompe, avec au moins deux entretoises de liaison (2) qui s'étendent entre la première et la seconde collerettes (1,3) dans la surface d'enveloppe d'un tronc de cône imaginaire,
**caractérisé par le fait que** la première collerette (1) présente un nombre d'évidements (6) dirigés vers l'intérieur correspondant au nombre des entretoises de liaison (2) qui s'étendent respectivement sur une zone angulaire qui se trouve respectivement entre deux entretoises de liaison(2)
et que la seconde collerette (3) présente un nombre d'évidements (10) dirigés vers l'extérieur correspondant au nombre des entretoises de liaison (2) qui s'étendent respectivement sur une zone angulaire sur laquelle s'étend une collerette de liaison (2).

2. Accouplement selon la revendication 1,
**caractérisé par le fait que** la première collerette (1) est reliée à la seconde collerette (3) par deux à huit, en particulier par quatre entretoises de liaison (2).

3. Accouplement selon la revendication 1 ou 2,
**caractérisé par le fait qu'**il est fabriqué en fonte grise.

4. Dispositif pour la fabrication d'un accouplement selon l'une des revendications précédentes par coulée, avec une première moitié de moule (12) qui peut être enfoncée, par un noyau interne (13) formant le contour interne de l'accouplement, dans une seconde moitié de moule (14) formant le contour externe de l'accouplement,
**caractérisé par le fait que** le noyau interne (13) présente des saillies (18) dirigées radialement vers l'extérieur qui s'étendent respectivement sur une zone angulaire qui correspond à la zone angulaire entre respectivement deux entretoises de liaison (2) et qui, à l'état enfoncées l'une dans l'autre des deux moitiés de moule (12,14), sont logées dans des évidements (19) conformés en correspondance de la seconde moitié de moule.

5. Dispositif selon la revendication 4,
**caractérisé par le fait que** les saillies (18) du noyau interne (13) forment les zones ouvertes (5) entre respectivement deux entretoises de liaison (2) de l'accouplement et les évidements (6) dans la première collerette (1) de l'accouplement.
